(19) Europäisches Patentamt
European Patent Office
Office européen des brevets

(11) EP 1 460 119 B1

(12) # EUROPÄISCHE PATENTSCHRIFT

(45) Veröffentlichungstag und Bekanntmachung des Hinweises auf die Patenterteilung:
**11.10.2006 Patentblatt 2006/41**

(51) Int Cl.:
*C09J 133/08* (2006.01) *C09J 199/00* (2006.01)
*C08K 3/32* (2006.01) *C08K 3/28* (2006.01)

(21) Anmeldenummer: **04003969.5**

(22) Anmeldetag: **21.02.2004**

(54) **Schwerentflammbare Haftklebemasse, Verfahren zu ihrer Herstellung sowie ihre Verwendung zur Herstellung eines Haftklebebands**

Flameproof adhesive, its production as well as its use in the production of adhesive tape

Adhésif ignifugé, sa production et son utilisation pour la production du ruban adhésif

(84) Benannte Vertragsstaaten:
**DE ES FR GB IT**

(30) Priorität: **18.03.2003 DE 10312031**

(43) Veröffentlichungstag der Anmeldung:
**22.09.2004 Patentblatt 2004/39**

(73) Patentinhaber: **tesa AG**
**20253 Hamburg (DE)**

(72) Erfinder:
- **Husemann, Marc**
  **22605 Hamburg (DE)**
- **Zöllner, Stephan**
  **D-21244 Buchholz/Nordheide (DE)**

(56) Entgegenhaltungen:
- **DATABASE WPI Section Ch, Week 200382 Derwent Publications Ltd., London, GB; Class A14, AN 2003-882148 XP002277316 & JP 2003 160768 A (DAINIPPON INK & CHEM INC), 6. Juni 2003 (2003-06-06)**
- **DATABASE WPI Section Ch, Week 200326 Derwent Publications Ltd., London, GB; Class A81, AN 2003-257609 XP002277317 & CN 1 183 445 A (ZHAO X), 3. Juni 1998 (1998-06-03)**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 460 119 B1

Printed by Jouve, 75001 PARIS (FR)

## Beschreibung

Die Erfindung betrifft eine schwerentflammbare, im Wesentlichen lösungsmittelfreie Haftklebemasse, Verfahren zu ihrer Herstellung sowie ihre Verwendung zur Herstellung eines Haftklebebands.

Es existieren eine Vielzahl von Anwendungen, für die Haftklebebänder schwer entflammbar sein müssen. Der Gesetzgeber schreibt beispielsweise für viele Bürogebäude oder öffentliche Gebäude strenge Anforderungen hinsichtlich der Entflammbarkeit für die verwendeten Baumaterialien vor. Da diese teilweise auch verklebt werden müssen, werden diese Anforderungen auch an die verwendeten Haftklebebänder gestellt. Ein weiterer Bereich ist der Verkehr. In Flugzeugen oder auf Schiffen müssen ebenfalls eine Vielzahl von Baumaterialien schwer oder gar nicht entflammbar sein. Auch hier wird in einer Vielzahl von Anwendungen mit schwer entflammbaren Haftklebebändern verklebt.

Auch in der Computertechnologie werden mehr und mehr elektronische Teile miteinander verklebt. Durch die Miniaturisierung werden ebenfalls immer höhere Anforderungen an die Haftklebebänder gestellt. So können zum Teil sehr hohe Temperaturen in den elektronischen Schaltkreisen auftreten oder die Haftklebebänder müssen schwalllötbeständig sein. Durch das Schwalllötbad werden z.B. auf Schaltkreisen Lötverbindungen hergestellt. Hierbei treten Temperaturen von größer 280 °C auf, so dass die Gefahr besteht, dass sich die Haftklebebänder unter diesen Temperaturen entzünden.

Neben den oben genannten Anforderungen bezüglich der Schwerentflammbarkeit existieren natürlich noch eine Vielzahl von sekundären Anforderungen, beispielsweise in der Computerindustrie geringes Ausgasen von Lösungsmitteln, Langzeitbeständigkeit auch unter UV-Licht, und auch Einsetzbarkeit in einem weiten Temperaturbereich. Diese sekundären Anforderungen können sehr gut durch doppelseitige Haftklebebänder mit Acrylathaftklebemassen erfüllt werden. Polyacrylate besitzen jedoch den Nachteil, sehr gut entflammbar zu sein und erfüllen daher nicht die Anforderungen an die Schwerentflammbarkeit.

Daher werden diesen Haftklebemassen Flammschutzmittel hinzugesetzt. Diese Technik ist bereits seit langem bekannt. So können beispielsweise phosphat-, brom- oder chlorhaltige Verbinden, Al-Verbindungen oder schwefelhaltige Verbindungen eingesetzt werden. Insbesondere die halogenhaltigen Zusätze werden heute aus Umweltschutzgründen nur noch sehr begrenzt eingesetzt, da bei einem eventuellen Recyclingprozess Dioxine und andere Umweltgifte freigesetzt werden können. Die übrigen Zusätze besitzen ebenfalls Nachteile, da sie die klebtechnischen Eigenschaften verschlechtern, insbesondere die Klebkraft herabsetzen, und zu hohen Anteilen hinzugesetzt werden müssen.

Der englischsprachige Abstract der JP 2003 160768 A (DATABASE WPI Section Ch, Week 200382 Derwent Publications Ltd., London, GB, Class A14, AN 2003-882148 & JP 2003 160768 A) beschreibt eine Haftklebemasse , welche einen hitzeleitfähigen elektrisch isolierenden Füllstoff enthält. Die Haftklebemasse basiert auf einer synthetische Harzemulsion und einem (Meth-)Acrylsäureester-Copolymer. Als Zusatzstoff kann unter anderem Ammoniumpolyphosphat zugegeben sein, aber über die Menge des Ammoniumpolyphosphats werden keine Angaben gemacht.

Der englischsprachige Abstract der CN 1 183 445 A (DATABASE WPI Section Ch, Week 200326 Derwent Publications Ltd., London, GB, Class A81, AN 2003-257609 & CN 1 183 445) beschreibt eine feuerfeste Klebemasse, der unter anderem Ammoniumpolyphosphat beigemengt sein kann. Eine Haftklebemasse wird nicht beschrieben, Ausführungen zu Anforderungen an haftklebende Bedingungen werden entsprechend nicht gemacht.

Der vorliegenden Erfindung lag daher die Aufgabe zugrunde, eine schwerentflammbare und möglichst lösungsmittelfreie Haftklebemasse zur Verfügung zu stellen, welche die oben genannten Anforderungen erfüllt. Die Haftklebemasse soll insbesondere für die Herstellung von schwerentflammbaren Haftklebebändern, die höchsten Sicherheitsanforderungen genügen, geeignet sein.

Gelöst wird die Aufgabe durch eine schwerentflammbare Haftklebemasse, umfassend

(a) mindestens eine Acrylat-Klebstoffkomponente.
(b) mindestens eine Ammoniumpolyphosphat-Komponente und
(c) mindestens eine Harz-Komponente

wobei die mindestens eine Ammoniumpolyphosphat-Komponente einen Masseanteil von mindestens 25 % in der Haftklebemasse aufweist.

Überraschend und für den Fachmann nicht vorhersehbarer weist eine Haftklebemasse nach vorstehender Formulierung eine äußerst geringe bis gar nicht vorhandene Tendenz zur Entflammung und sehr geringe Lösungsmittelanteile auf. Gleichzeitig weist die erfindungsgemäße Haftklebemasse eine gegenüber herkömmlichen Haftklebemassen verbesserte Klebkraft auf.

Die Unteransprüche betreffen bevorzugte Weiterentwicklungen dieser Haftklebemasse.

Die Haftklebemasse kann besonders vorteilhaft für die Herstellung von schwerentflammbaren Haftklebebändern verwendet werden, welche bevorzugt ein mit einem Flammschutzmittel imprägniertes Trägerband umfassen, das einseitig oder doppelseitig mit der erfindungsgemäßen Haftklebemasse beschichtet ist. Nachfolgend werden einige Einzelheiten zur Herstellung der Haftklebebänder gegeben.

Haftklebemasse

Die erfindungsgemäße Haftklebemasse setzt sich vorzugsweise zusammen aus mindestens 35 Gew.-% der mindestens einen Acrylat-Klebstoffkomponente, mindestens 25 Gew.-% Ammoniumpolyphosphat, insbesondere 30 bis 40 Gew.-%, sowie mindestens 25 Gew.-% der mindestens einen Harz-Komponente. Dabei weist die mindestens eine Acrylat-Klebstoffkomponente eine mittlere molekulare Masse $M_w$ von höchstens 600.000 g/mol auf.

Als Hauptkomponente der Haftklebemasse werden bevorzugt Acrylat- beziehungsweise Methacrylat-Haftklebemassen eingesetzt, das heißt Haftklebemassen die im Wesentlichen auf mindestens einem (Meth)Acrylat-Monomer basieren, der gegebenenfalls noch mit einem oder mehreren Comonomeren copolymerisiert sein kann. Dabei kann das Monomeren/Comonomeren-Gemisch im fertigen Produkt bereits voll auspolymerisiert oder nur teil polymerisiert vorliegen.

Die zur Herstellung dieser Massen eingesetzten Monomere/Comonomere werden derart gewählt, dass die resultierenden Polymere bei Raumtemperatur als Haftklebemassen eingesetzt werden können, insbesondere derart, dass die resultierenden Polymere haftklebende Eigenschaften besitzen, beispielsweise entsprechend dem "Handbook of Pressure Sensitive Adhesive Technology" von Donatas Satas (van Nostrand, New York 1989).

Zur Erzielung einer bevorzugten Glasübergangstemperatur $T_G$ der Polymere von $T_G \leq 25$ °C für Haftklebemassen, die bevorzugt bei Raumtemperatur eingesetzt werden, werden entsprechend den vorstehenden Ausführungen die Monomere sehr bevorzugt derart ausgesucht und die mengenmäßige Zusammensetzung der Monomermischung vorteilhaft derart gewählt, dass sich nach der so genannten ***Fox***-Gleichung (G1) (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in Kelvin.

Nach einer vorteilhaften Ausgestaltung der Erfindung basiert die mindestens eine Acrylat-Klebstoffkomponente, die vorzugsweise einen Massenanteil von mindestens 35 % in der Haftklebemasse aufweist, auf mindestens einem Acrylat-Monomer der allgemeinen Formel (1),

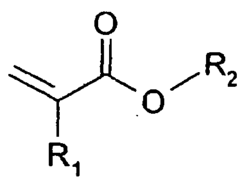

(1)

worin $R_1$ gleich H oder ein $CH_3$-Rest bedeutet und $R_2$ gleich H bedeutet oder aus der Gruppe der gesättigten, unverzweigten oder verzweigten, substituierten oder nicht-substituierten $C_1$- bis $C_{30}$-Alkylresten gewählt ist.

Der $R_2$-Rest dieser Acrylat-Monomere kann auch noch mit funktionellen Gruppen substituiert sein, insbesondere ausgewählt aus Carboxyl-, Sulfonsäure-, Hydroxyl-, Lactam-, Lacton-, N-substituierten Amid-, N-substituierten Amin-, Carbamat-, Epoxy-, Thiol-, Alkoxy-, Cyan-, Halogenid- und Etherresten.

In einer sehr bevorzugten Weise werden solche Acrylat- beziehungsweise MethacrylatMonomere eingesetzt, die Acryl- oder Methacrylsäureester mit Alkylgruppen mit 4 bis 14 C-Atomen, vorzugsweise mit 4 bis 9 C-Atome umfassen. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat.

Weitere einsetzbare Verbindungsklassen sind (Meth)Acrylate mit überbrückten Cycloalkylresten mit mindestens 6 C-Atomen. Die Cycloalkylalkohole können auch substituiert sein, etwa durch $C_1$- bis $C_6$-Alkylgruppen, Halogenid- oder Cyanogruppen oder dergleichen. Spezifische Beispiele sind Cyclohexylmethacrylate, Isobornylacrylat, Isobornylmethacrylate und 3,5-Dimethyladamantylacrylat.

In einer bevorzugten Vorgehensweise werden als Comonomere Verbindungen eingesetzt, die mindestens

einen Substituenten tragen, insbesondere polare Gruppen wie Carboxyl-, Sulfonsäure-, Hydroxyl-, Lactam-, Lacton-, N-substituierte Amid-, N-substituierte Amin-, Carbamat-, Epoxy-, Thiol-, Alkoxy-. Cyanid-, Halogenid- oder Ethergruppen oder ähnliches tragen.

Ebenfalls geeignete, moderat basische Comonomere sind einfach oder zweifach N-alkylsubstituierte Amide, insbesondere Acrylamide, beispielsweise N,N-Dimethylacrylamid, N,N-Dimethylmethacrylamid, N-tert-Butylacrylamid, N-Vinylpyrrolidon, N-Vinyllactam, N-Methylolacrylamid, N-Methylolmethacrylamid, N-(Butoxymethyl)methacrylamid, N-(Ethoxymethyl)acrylamid, N-Isopropylacrylamid, wobei diese Aufzählung nicht abschließend ist.

Weitere bevorzugte Beispiele für Comonomere sind Hydroxyethylacrylat Hydroxyethylmethacrylat" Hydroxypropylacrylat, Hydroxypropylmethacrylat, Allylalkohol, Maleinsäureanhydrid, Itaconsäureanhydrid, Itaconsäure, Glyceridylmethacrylat, Phenoxyethylacrylat, Phenoxyethylmethacrylat, 2-Butoxyethylacrylat, 2-Butoxyethylmethacrylat, Cyanoethylacrylat, Cyanoethylmethacrylat, Glycerylmethacrylat, 6-Hydroxyhexylmethacrylat, Vinylessigsäure, Tetrahydrofurylacrylat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren sehr bevorzugten Vorgehensweise werden als Comonomere Vinylverbindungen, insbesondere Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt, wie Vinylacetat, Vinylformamid, Vinylpyridin, Ethylvinylether, Vinylchlorid, Vinylidenchlorid und Acrylonitril.

Weiterhin werden optional in einer weiteren Vorgehensweise Photoinitiatoren mit einer copolymerisierbaren Doppelbindung als Comonomer eingesetzt. Als Photoinitiatoren sind Norrish-I- und -II-Photoinitiatoren geeignet. Beispiele sind z.B. Benzoinacrylat und ein acryliertes Benzophenon der Fa. UCB (Ebecryl P 36®). Im Prinzip können alle dem Fachmann bekannten Photoinitiatoren copolymerisiert werden, die das Polymer über einen Radikalmechnismus unter UV-Bestrahlung vernetzen können. Ein Überblick über mögliche einsetzbare Photoinitiatoren, die mit einer Doppelbindung funktionalisiert werden können, wird in Fouassier: Photoinititation, Photopolymerization and Photocuring: Fundamentals and Applications", Hanser-Verlag, München 1995, gegeben. Ergänzend wird Carroy et al. in "Chemistry and Technology of UV and EB Formulation for Coatings, Inks and Paints", Oldring (Hrsg.), 1994, SITA, London eingesetzt.

In einer weiteren bevorzugten Vorgehensweise werden zu den beschriebenen Comonomeren Monomere hinzugesetzt, die eine hohe statische Glasübergangstemperatur besitzen. Als Komponenten eignen sich aromatische Vinylverbindungen, beispielsweise Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat, 4-Biphenylmethacrylat, 2-Naphthylacrylat, 2-Naphthylmethacrylat sowie Mischungen aus diesen Monomeren, wobei diese Aufzählung nicht abschließend ist.

Weiterhin ist Bestandteil der Haftklebemasse ein Ammoniumpolyphosphat mit mindestens 25 Gew.-%. Die Obergrenze ist abhängig von der Monomer/Comonomer-Zusammensetzung des Polyacrylats sowie von der bevorzugten Haftklebrigkeit des Systems. Bei Massenanteilen des Ammoniumpolyphosphats von größer 60 Gew.-% ist die Haftklebemasse nicht mehr entflammbar, weist aber auch nur noch eine geringe Haftklebrigkeit auf. In einer sehr bevorzugten Auslegung der Erfindung werden zwischen 30 und 40 Gew.-% des Ammoniumpolyphosphats eingesetzt. Ammoniumpolyphosphate sind kommerziell erhältlich, etwa unter dem Handelsnamen Exolit™ 422.

Ein weiterer Bestandteil der Haftklebemassen sind Harze. Als zuzusetzende, klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie $C_5$- bis $C_9$- Kohlenwasserstoffharze sowie andere Kohlenwasserstoffharze. Beliebige Kombinationen dieser und weiterer Harze können eingesetzt werden, um die Eigenschaften der resultierenden Klebemasse wunschgemäß einzustellen. Im Allgemeinen lassen sich alle mit dem entsprechenden Poly(meth)acrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen. In einer sehr bevorzugten Auslegung werden Terpenphenol-Harze und $C_5$-$C_9$-Kohlenwasserstoff-Harze zugemischt.

Weiterhin können optional Phosphat-Weichmacher (Plastifizierungsmittel), nicht brennbare Füllstoffe, Mikrokugeln aus anderen Materialien, Kieselsäure, Silikate, Keimbildner, Blähmittel, Compoundierungsmittel und/oder Alterungsschutzmittel, letztere beispielsweise in Form von primären und sekundären Antioxidantien oder in Form von Lichtschutzmitteln zugesetzt sein. In einer bevorzugten Auslegung werden Oligophosphate als Weichmacher hinzugesetzt.

Zusätzlich können Vernetzer und Promotoren zur Vernetzung beigemischt werden. Geeignete Vernetzer für die Elektronenstrahlvernetzung und UV-Vernetzung sind beispielsweise bi- oder multifunktionelle Acrylate, bi- oder multifunktionelle Isocyanate (auch in blockierter Form) oder bi- oder multifunktionelle Epoxide.

Zu einer optionalen Vernetzung mit UV-Licht können der Haftklebemasse UVabsorbierende Photoinitiatoren

zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (z.B. Irgacure 651® von Fa. Ciba Geigy®), 2,2-Dimethoxy-2-phenyl-1-phenylethanon, Dimethoxyhydroxyacetophenon, substituierte α-Ketole, wie z. B. 2-Methoxy-2-hydroxypropiophenon, aromatische Sulfonylchloride, wie z. B. 2-Naphthylsulfonylchlorid, und photoaktive Oxime, wie z. B. 1-Phenyl-1,2-propandion-2-(O-ethoxycarbonyl)oxim

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin- oder Fluorenon-Reste, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier ("Photoinititation, Photopolymerization and Photocuring: Fundamentals and Applications", Hanser-Verlag, München 1995) gegeben. Ergänzend kann Carroy et al. (in "Chemistry and Technology of UV and EB Formulation for Coatings, Inks and Paints", Oldring (Hrsg.), 1994, SITA, London) herangezogen werden.

Herstellungsverfahren für die Haftklebemasse

Die Erfindung betrifft ferner ein Verfahren zur Herstellung der schwerentflammbaren Haftklebemasse, wobei

(a) mindestens eine Acrylat-Klebstoffkomponente durch zumindest teilweise Polymerisation mindestens eines Acrylat-Monomers, gegebenenfalls in Gegenwart mindestens eines Comonomers, hergestellt wird,
(b) nacheinander oder gleichzeitig mindestens eine Ammoniumpolyphosphat-Komponente und mindestens eine Harz-Komponente der mindestens einen Acrylat-Klebstoffkomponente zugemengt werden.

Zur Herstellung der Poly(meth)acrylat-Komponente werden vorteilhaft konventionelle radikalische Polymerisationen mit den Monomeren, gegebenenfalls in Gegenwart der Comonomere durchgeführt. Für die bevorzugt thermischinitiert radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist in Houben Weyl (Methoden der Organischen Chemie, Vol. E 19a, S. 60 - 147) beschrieben. Diese Methoden werden in bevorzugter Weise in Analogie angewendet.

Beispiele für geeignete Radikalquellen sind Peroxide, Hydroperoxide und Azoverbindungen. Als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropyl-percarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Fa. DuPont) oder Azodisobutyronitril (AIBN) verwendet.

Die maximalen Molekulargewichte $M_w$ der Acrylat-Klebstoffkomponente von 600.000 g/mol werden über Größenausschlußchromatographie (GPC) oder Matrixunterstützte Laser-Desorption/Ionisations-Massenspektrometrie (MALDI-MS) bestimmt.

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z.B. Hexan, Heptan, Octan, Isooctan), aromatische Kohlenwasserstoffe (z.B. Benzol, Toluol, Xylol), Ester (z.B. Essigsäureethylester, Essigsäurepropyl-, -butyl- oder -hexylester), halogenierte Kohlenwasserstoffe (z.B. Chlorbenzol), Alkanole (z.B. Methanol, Ethanol, Ethylenglycol, Ethylenglycolmonomethylether) und Ether (z.B. Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, enthaltend aliphatische Alkohole, Glycole, Ether, Glycolether, Pyrrolidine, N-Alkylpyrrolidinone, N-Alkylpyrrolidone, Polyethylenglycole, Polypropylenglycole, Amide, Carbonsäuren und Salze davon, Ester, Organosulfide, Sulfoxide, Sulfone, Alkoholderivate, Hydroxyetherderivate, Aminoalkohole, Ketone und dergleichen, sowie Derivate und Gemische davon.

Die Polymerisationszeit beträgt - je nach Umsatz und Temperatur - zwischen 2 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann in diesem Fall durch Erwärmen auf 50 bis 160 °C, je nach Initiatortyp, initiiert werden.

Für die Herstellung kann es auch von Vorteil sein, die Acrylat-Klebstoffkomponente in Substanz zu polymerisieren. Hier eignet sich insbesondere die Präpolymerisationstechnik. Die Polymerisation wird mit UV-Licht initiiert, wird aber nur bis zu einem geringen Umsatz von ca. 10 bis 30 % geführt. Anschließend kann dieser Polymersirup z.B. in Folien eingeschweißt werden (im einfachsten Fall Eiswürfel) und dann in Wasser bis zu einem hohen Umsatz durchpolymerisiert werden. Die entstehenden Pellets lassen sich dann als Acrylatschmelzkleber einsetzen, wobei für den Aufschmelzvorgang besonders bevorzugt Folienmaterialien eingesetzt werden, die mit dem Polyacrylat kompatibel sind. Auch für diese P räparationsmethode lassen sich die thermisch-leitfähigen Materialzusätze vor oder nach der Polymerisation zusetzen.

In weiteren Auslegungsvarianten der Erfindung werden zur Herstellung der erfinderischen Haftklebemassen kontrollierte radikalische oder lebende Polymerisationsprozesse eingesetzt.

Ein anderes vorteilhaftes Herstellungsverfahren für die Poly(meth)acrylathaftklebemassen ist die anionische Polymerisation. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Die Herstellung der schwerentflammbaren Haftklebebänder erfolgt vorteilhafterweise durch Beschichtung aus Hotmelt-Systemen, das heißt aus der Schmelze (s.u.). Für das Herstellungsverfahren kann es daher erforderlich sein, vor der Beschichtung das Lösungsmittel aus der H aftklebemasse zu entfernen. Hier können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösungsmittel oder Wasser wird bevorzugt über mehrere Vakuumstufen abdestilliert.

Zudem wird je nach Destillationstemperatur des Lösungsmittels gegengeheizt. Die Restlösungsmittelanteile betragen insbesondere weniger als 1 %, vorzugsweise weniger als 0,5 % und besonders bevorzugt weniger als 0,2 %. Der Hotmelt wird aus der Schmelze weiterverarbeitet.

In der Schmelze werden in einem sehr bevorzugten Verfahren die Harze bzw. das Ammoniumpolyphosphat hinzucompoundiert. Die Compoundierung zu der Schmelze erfolgt bevorzugt in einem Doppelschneckenextruder oder einem Planetwalzenextruder. Durch Scherenergie werden sowohl Harze als auch Ammoniumpolyphosphat homogen verteilt.

Beschichtung, Träger, Vernetzung

Zur Beschichtung im Hotmelt können unterschiedliche Beschichtungsverfahren herangezogen werden. In einer Ausführung werden die erfinderischen Haftklebemassen über ein Walzenbeschichtungsverfahren beschichtet. Unterschiedliche Walzenbeschichtungsverfahren sind im "Handbook of Pressure Sensitive Adhesive Technology" von Donatas Satas (van Nostrand, New York 1989) beschrieben. In einer weiteren Ausführung werden die Haftklebemassen über eine Schmelzdüse beschichtet. Hier kann zwischen dem Kontakt- und dem kontaktlosen Verfahren unterschieden werden. In einem weiteren Verfahren wird die erfinderische Haftklebemasse durch die Extrusionsbeschichtung aufgetragen. Die Extrusionsbeschichtung wird bevorzugt mit einer Extrusionsdüse vorgenommen. Die verwendeten Extrusionsdüsen können vorteilhaft aus einer der folgenden Kategorien stammen: T-Düse, Fischschwanz-Düse und Bügel-Düse. Die einzelnen Typen unterscheiden sich durch die Gestalt ihres Fließkanals.

Für die erfinderischen Haftklebebänder werden die Haftklebemassen auf das Vlies, PET-Vlies, Gewebe oder Gewebevlies beschichtet. Dies kann direkt oder im Transferverfahren erfolgen. Für die Beschichtung im Transferverfahren wird zunächst der Haftklebefilm auf einen Prozessliner oder ein silikonsiertes oder fluoriertes Trennpapier abgelegt und dann zu dem Träger zu kaschiert.

Zur Erzielung einer hohen Schwerentflammbarkeit ist der Träger des schwerentflammbaren Haftklebebandes mit einem Flammschutzmittel imprägniert. Ein besonders effizientes Flammschutzmittel für diesen Zweck ist Flovan™ der Fa. Pfersee.

Optional kann nach Beschichtung des Trägerbandes mit der Haftklebemasse eine UV-Vernetzung durchgeführt werden. Hierfür wird mittels kurzwelliger ultravioletter Bestrahlung in einem Wellenlängenbereich von 2 00 bis 400 nm, je nach verwendetem UV-Photoinitiator, bestrahlt, insbesondere unter Verwendung von Quecksilber-Hochdruck- oder -Mitteldruck-Lampen bei einer Leistung von 80 bis 240 W/cm. Die Bestrahlungsintensität wird der jeweiligen Quantenausbeute des UV-Photoinitiators und dem einzustellenden Vernetzungsgrad angepasst.

Weiterhin kann nach einem bevorzugten Verfahren die erfinderische Haftklebemasse mit Elektronenstrahlen vernetzt werden. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und der wichtigsten Verfahrensparameter findet man bei Skelhorne (Electron Beam Processing, in Chemistry and Technology of UV and EB formulation for Coatings, Inks and Paints, Vol. 1, 1991, SITA, London). Typische Beschleunigungsspannungen liegen im Bereich zwischen 50 und 500 kV, vorzugsweise 80 und 300 kV. Die angewandten Streudosen bewegen sich zwischen 5 bis 150 kGy, insbesondere zwischen 20 und 100 kGy.

Es können auch beide Vernetzungsverfahren kombiniert miteinander angewendet werden oder andere Verfahren, die hochenergetische Bestrahlung ermöglichen.
Weitere vorteilhafte Ausgestaltungen der Erfindung sind Gegenstand der übrigen Unteransprüche.

Ausführungsbeispiele

Die Erfindung wird im Folgenden durch Experimente beschrieben, ohne sich durch die Wahl der untersuchten Proben unnötig beschränken zu wollen.
Folgende Testmethoden wurden angewendet.

Gelpermeationschromatographie GPC (Test A)

Die Bestimmung des mittleren Molekulargewichtes $M_w$ und der Polydisperisität PD erfolgte über die Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 μm [= 5 μ], $10^2$ nm [= $10^5$A], ID 8,0 mm x 50 mm verwendet. Zur Auftrennung wurden die Säulen PSS-SDV, 5 μm [= 5 μ], $10^2$ nm sowie $10^4$ nm und $10^5$ nm $10^2$ sowie $10^5$ und $10^6$A] mit jeweils ID 8,0 mm x 300 mm eingesetzt. Die Probenkonzentration betrug 4 g/l, die Durchflussmenge 1,0 ml pro Minute. Es wurde gegen PMMA-Standards gemessen.

Flammfestigkeit (Test B)

Die Untersuchung der Entflammbarkeit können nach UL-94 VTM-0, ISO 9772 , ISO 9773 und IEC 60707 durchgeführt werden. Im Rahmen dieser Erfindung wurde die erfinderischen Haftklebemassen nach DIN 40633 geprüft, wobei Z 3 = brennbar, Z 2 = selbstverlöschend und Z 1 = nicht brennbar darstellen.

180° Klebkrafttest (Test C)

Ein 20 mm breiter Streifen einer auf Polyester gecoateten Haftklebemasse wurde auf Stahlplatten aufgebracht. Es wurden - je nach Richtung und Reckung - Längs- oder Quermuster auf der Stahlplatte verklebt. Der Haftklebestreifen wurde zweimal mit einem 2 kg Gewicht auf das Substrat aufgedrückt. Das Klebeband wurde anschließend sofort mit 30 mm/min und in einem Winkel von 180° vom Substrat abgezogen. Die Stahlplatten wurden zweimal mit Aceton und einmal mit Isopropanol gewaschen. Die Messergebnisse sind in N/cm angegeben und sind aus drei Messungen gemittelt. Alle Messungen wurden bei Raumtemperatur unter klimatisierten Bedingungen durchgeführt.

Restlösungsmittel (Test D)

Die Bestimmung der Restlösungsmittelanteile erfolgte gravimetrisch. 2 g des Acrylatschmelzhaftklebers wurden in einer Blechdose gegeben und diese offen bei 120 °C im Trockenschrank gelagert. Anschließend wurde das Gewicht wiederum gemessen. Die Differenz aus ursprünglichen Gewicht des Haftklebers und dem gemessenen Gewicht wird prozentual als Restlösungsmittelverlust angegeben,

Herstellung der Proben

Referenzbeispiel 1

Ein für radikalische Polymerisationen konventioneller 2 L-Glasreaktor wurde mit 8 g Acrylsäure, 392 g 2-Ethylhexylacrylat, und 300 g Aceton/Isopropanol (90:10) befüllt. Nach 45 Minuten Durchleiten von Stickstoffgas unter Rühren wurde der Reaktor auf 58 °C hochgeheizt und 0,2 g 2,2-Azobis-(2-Methyl-butyronitril) (Vazo67®, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurden wiederum 0,2 g Vazo 67 hinzugegeben. Nach 3 und 6 h wurde jeweils mit 150 g eines Acetonllsopropanol-Gemischs (90/10) verdünnt. Zur Reduktion der Restinitiatoren wurden nach 8 und nach 10 h jeweils 0,4 g Di-(4-tert-Butylcyclohexyl)peroxydicarbonat (Perkadox 16®, Fa. Akzo Nobel) hinzugegeben. Die Reaktion wurde nach 22 h Reaktionszeit abgebrochen und auf Raumtemperatur abgekühlt.
Die Bestimmung des Molekulargewichtes nach Test A ergab ein $M_w$ = 470.000 g/mol bei einer Polydispersität $M_W/M_n$ = 4,3.
Die Klebemasse wurden dann unter Wärme und im Vakuum vom Lösungsmittel befreit und als Hotmelt durch eine Düse auf ein silikonisiertes Trennpapier (der Fa. Laufenberg) beschichtet (Masseauftrag 50 g/$m^2$). Anschließend wurde auf ein 50 μm dickes mit Flammschutzmittel Flovan (Fa. Pfersee) imprägniertes Vlies beidseitig kaschiert. Die

Haftklebemassen wurde mit 60 kGy und 200 kV ES vernetzt.

Das so erzeugte Haftklebeband wurde nach den Testmethoden B, C und D getestet.

Referenzbeispiel 2

Es wurde analog Referenzbeispiel 1 vorgegangen. Das Polymer wurde vor der Hotmeltbeschichtung in einem Kneter mit 30 Gew.-% Magnesiumhydroxid/Aluminiumhydroxid (Martinal OL-104S) abgemischt.

Referenzbeispiel 3

Es wurde analog Referenzbeispiel 1 vorgegangen. Das Polymer wurde vor der Hotmeltbeschichtung in einem Kneter mit 45 Gew.-% Magnesiumhydroxid/Aluminiumhydroxid (Martinal OL-104S) abgemischt.

Referenzbeispiel 4

Es wurde analog Referenzbeispiel 1 vorgegangen. Das Polymer wurde vor der Hotmeltbeschichtung in einem Kneter mit 15 Gew.-% mikroverkapselten roten Phosphor (Safest S3) abgemischt.

Referenzbeispiel 5

Es wurde analog Referenzbeispiel 1 vorgegangen. Das Polymer wurde vor der Hotmeltbeschichtung in einem Kneter mit 60 Gew.-% Oligophosphat (Reofos 65™ der Fa. Great Lake Chemicals) abgemischt.

Referenzbeispiel 6

Es wurde analog Referenzbeispiel 1 vorgegangen. Das Polymer wurde vor der Hotmeltbeschichtung in einem Kneter mit 20 Gew.-% Ammoniumpolyphosphat (Pyrovatex) abgemischt.

Beispiel 1

Es wurde eine Acrylat-Klebstoffkomponente analog Referenzbeispiel 1 hergestellt. Das Polymer wurde vor der Hotmeltbeschichtung in einem Kneter mit 30 Gew.-% Ammoniumpolyphosphat (Exolit 422) und 30 Gew-% Terpenphenolharz (Dertophene DT 110) abgemischt.

Beispiel 2

Es wurde eine Acrylat-Klebstoffkomponente analog Referenzbeispiel 1 hergestellt. Das Polymer wurde vor der Hotmeltbeschichtung in einem Kneter mit 30 Gew.-% Ammoniumpolyphosphat (Exolit 422) und 30 Gew-% $C_5$-$C_9$-Harz (TK 90, VFT Rüttgers) abgemischt.

Beispiel 3

Es wurde eine Acrylat-Klebstoffkomponente analog Referenzbeispiel 1 hergestellt. Das Polymer wurde vor der Hotmeltbeschichtung in einem Kneter mit 30 Gew.-% Ammoniumpolyphosphat (Exolit 422), 30 Gew-% $C_5$-$C_9$-Harz (TK 90, VFT Rüttgers) und 5 Gew.-% Oligophosphat (Reofos 65, Fa. Great Lake Chemicals) abgemischt.

Resultate

In einem ersten Schritt wurde die Flammfestigkeit der Haftklebemassen aller Beispiele ermittelt. Die Kategorisierung fand nach Z = 1 (nicht brennbar), Z = 2 (selbstverlöschend) und Z = 3 (brennbar) nach DIN 40633 statt. Die Ergebnisse sind in Tabelle 1 zusammengefasst.

Tabelle 1. Flammfestigkeit nach Test B.

| Beispiel | Flammfestigkeit (Test B) |
|---|---|
| Referenzbeispiel 1 | Z = 3 |
| Referenzbeispiel 2 | Z = 3 |

(fortgesetzt)

| Beispiel | Flammfestigkeit (Test B) |
|---|---|
| Referenzbeispiel 3 | Z = 2 |
| Referenzbeispiel 4 | Z = 2 |
| Referenzbeispiel 5 | Z = 3 |
| Referenzbeispiel 6 | Z = 2 |
| Beispiel 1 | Z = 1 |
| Beispiel 2 | Z = 1 |
| Beispiel 3 | Z = 1 |

Der Tabelle 1 ist zu entnehmen, dass nur die Haftklebemassen der erfinderischen Beispiele 1 bis 3 die höchste Stufe Z = 1 erreicht wurde und somit diese Haftklebemassen absolut nicht brennbar sind. Die erfindungsgemäßen Haftklebemassen sind somit auch denjenigen Referenzmassen überlegen, denen gegenüber der hier beschriebenen Komposition lediglich die Harz-Komponente fehlt.

Zur weiteren Charakterisierung der erfinderischen Haftklebemassen wurde die Klebkraft auf Stahl der mit diesen hergestellten Haftklebebändern nach Test C bestimmt. Die ermittelten Werte sind in Tabelle 2 zusammengefasst.

Tabelle 2: Klebkraft auf Stahl nach Test C.

| Beispiel | Klebkraft auf Stahl (Test C) in [N/cm] |
|---|---|
| Referenzbeispiel 1 | 5,2 |
| Referenzbeispiel 2 | 1,4 |
| Referenzbeispiel 3 | 1,0 |
| Referenzbeispiel 4 | 4,1 |
| Referenzbeispiel 5 | 1,6 |
| Referenzbeispiel 6 | 4,4 |
| Beispiel 1 | 8,7 |
| Beispiel 2 | 8,5 |
| Beispiel 3 | 8,0 |

Durch Vergleich der Referenzbeispiele untereinander zeigt sich eine reduzierte Sofortklebkraft auf Stahl, die durch die Additivierung verursacht wird. Die erfinderischen Beispiele zeigen dagegen eine deutlich verbesserte Klebkraft selbst gegenüber der reinen Acrylat-Klebstoffkomponente gemäß Referenzbeispiel 1 bei gleichzeitig verbessertem Flammschutz.. Die Haftklebemassen gemäß der vorliegenden Erfindung weisen somit deutliche Vorteile gegenüber bestehende Konzepte zur Verbesserung des Flammschutzes von Acrylathaftklebemassen auf.

Weiterhin wurde der Restlösungsmittelanteil für die erfinderischen Haftklebebänder bestimmt. Die Ergebnisse sind in Tabelle 3 zusammengefasst.

Tabelle 3: Restlösemitelanteile nach Test D.

| Beispiel | Restlösemittelanteile (Test D) in [%] |
|---|---|
| Beispiel 1 | 0,3 |
| Beispiel 2 | 0,2 |
| Beispiel 3 | 0,5 |

Die gemessenen Werte liegen auf einem sehr niedrigen Niveau und zeigen, dass die Haftklebebänder sehr geringe Restlösungsmittelanteile besitzen.

**Patentansprüche**

1. Schwerentflammbare Haftklebemasse, umfassend

   (a) mindestens eine Acrylat-Klebstoffkomponente,
   (b) mindestens eine Ammoniumpolyphosphat-Komponente und
   (c) mindestens eine Harz-Komponente,

   **dadurch gekennzeichnet, dass**
   die mindestens eine Ammoniumpolyphosphat-Komponente einen Massenanteil von mindestens 25 % in der Haftklebemasse aufweist.

2. Haftklebemasse nach Anspruch 1, **dadurch gekennzeichnet, dass**
   die mindestens eine Ammoniumpolyphosphat-Komponente einen Massenanteil von 30 bis 40 % in der Haftklebemasse aufweist.

3. Haftklebemasse nach einem der vorhergehenden Ansprüche, **dadurch gekennzeichnet, dass**
   die mindestens eine Harz-Komponente einen Massenanteil von mindestens 25 % in der Haftklebemasse aufweist.

4. Haftklebemasse nach einem der vorhergehenden Ansprüche, **dadurch gekennzeichnet, dass**
   die mindestens eine Acrylat-Klebstoffkomponente eine mittlere molekulare Masse $M_w$ von höchstens 600.000 g/mol aufweist.

5. Haftklebemasse nach einem der vorhergehenden Ansprüche, **dadurch gekennzeichnet, dass**
   die mindestens eine Acrylat-Klebstoffkomponente auf mindestens einem Acrylat-Monomer der allgemeinen Formel (1) basiert,

   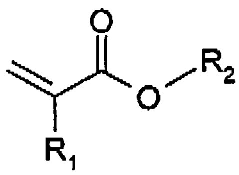

   (1)

   wobei $R_1$ gleich H oder ein $CH_3$-Rest ist und $R_2$ gleich H ist oder aus der Gruppe der gesättigten, unverzweigten oder verzweigten, substituierten oder nicht-substituierten $C_1$- bis $C_{30}$-Alkylresten gewählt ist.

6. Haftklebemasse nach einem der vorhergehenden Ansprüche, **dadurch gekennzeichnet, dass**
   die mindestens eine Acrylat-Klebstoffkomponente neben dem mindestens einem Acrylat-Monamer auf mindestens einem Comonomer in Form eines Photoinitiators mit einer copolymerisierbaren Doppelbindung, insbesondere eines Norrish-I- oder Norrish-II-Photoinitiators, Benzoinacrylats oder acrylierten Benzophenons, basiert.

7. Haftklebemasse nach zumindest einem der vorangehenden Ansprüche,, **dadurch gekennzeichnet, dass**
   die mindestens eine Acrylat-Klebstoffkomponente neben dem mindestens einem Acrylat-Monomer auf mindestens einem Comonomer basiert, dem mindestens eine weitere Komponente mit einer hohen statischen Glasübergangstemperatur zugesetzt ist, insbesondere eine aromatische Vinylverbindung, vorzugsweise mit $C_4$- bis $C_{18}$-Aromaten oder -Heteroaromaten.

8. Verwendung einer Haftklebemasse nach einem der Ansprüche 1 bis 7 zur Herstellung eines schwerentflammbares Haftklebebands,umfassend ein mit einem Flammschutzmittel imprägniertes Trägerband, das einseitig oder doppelseitig mit der Haftklebemasse beschichtet ist.

9. Verwendung nach Anspruch 8, **dadurch gekennzeichnet, dass**
   als Trägerband ein Vlies, insbesondere ein PET-Vlies oder ein Gewebevlies, oder ein Gewebe verwendet wird.

**10.** Verwendung nach Anspruch 8 oder 9, **dadurch gekennzeichnet, dass** das Trägerband mit der Haftklebemasse als Schmelze im Hotmelt-Verfahren auf beschichtet wird, insbesondere durch Walzenbeschichtung, in einem Schmelzdüsenverfahren oder durch Extrusionsbeschichtung.

**11.** Verfahren zur Herstellung einer schwerentflammbaren Haffklebemasse nach einem der Ansprüche 1 bis 7, wobei

(a) mindestens eine Acrylat-Klebstoffkomponente durch zumindest teilweise Polymerisation mindestens eines Acrylat-Monomers, gegebenenfalls in Gegenwart mindestens eines Comonomers, hergestellt wird und
(b) nacheinander oder gleichzeitig mindestens eine Ammoniumpolyphosphat-Komponente und mindestens eine Harz-Komponente der mindestens einen Acrylat-Klebstoffkomponente zugemengt werden.

**12.** Verfahren nach Anspruch 11, **dadurch gekennzeichnet, dass** die mindestens eine Ammoniumpolyphosphat-Komponente und die mindestens eine Harz-Komponente einer Schmelze der mindestens einen Acrylat-Klebstoffkomponente hinzu compoundiert werden, insbesondere in einem Extrusionsverfahren.

**13.** Schwerentflammbare Haftklebebänder mit einer Haftklebemasse nach einem der Ansprüche 1 bis 7.

## Claims

**1.** Flame-retardant pressure-sensitive adhesive comprising

(a) at least one acrylate adhesive component,
(b) at least one ammonium polyphosphate component and
(c) at least one resin component,

**characterized in that** the at least one ammonium polyphosphate component has a mass fraction of at least 25% in the pressure-sensitive adhesive.

**2.** Pressure-sensitive adhesive according to Claim 1, **characterized in that** the at least one ammonium polyphosphate component has a mass fraction of from 30 to 40% in the adhesive.

**3.** Pressure-sensitive adhesive according to any one of the preceding claims, **characterized in that** the at least one resin component has a mass fraction of at least 25% in the adhesive.

**4.** Pressure-sensitive adhesive according to any one of the preceding claims, **characterized in that** the at least one acrylate adhesive component with an average molecular mass has $M_w$ of not more than 600 000 g/mol.

**5.** Pressure-sensitive adhesive according to any one of the preceding claims, **characterized in that** the at least one acrylate adhesive component is based on at least one acrylate monomer of the general formula (1)

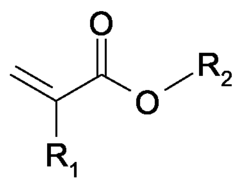

(1)

where $R_1$ is H or a $CH_3$ radical and $R_2$ is H or is selected from the group consisting of saturated, branched and unbranched, substituted and unsubstituted $C_1$ to $C_{30}$ alkyl radicals.

**6.** Pressure-sensitive adhesive according to any one of the preceding claims, **characterized in that** the at least one acrylate adhesive component, in addition to the at least one acrylate monomer, is based on at least one comonomer of a photoinitiator having a copolymerizable double bond, particularly of a Norrish I or Norrish II photoinitiator, benzoin acrylate or acrylated benzophenone.

**7.** Pressure-sensitive adhesive according to at least one of the preceding claims, **characterized in that** at least one acrylate adhesive component, in addition to the at least one acrylate monomer, is based on at least one comonomer to which at least one further component having a high static glass transition temperature is added, in particular an aromatic vinyl compound, preferably with $C_4$ to $C_{18}$ aromatics or heteroaromatics.

**8.** Use of a pressure-sensitive adhesive according to any one of Claims 1 to 7 for producing a flame-retardant pressure-sensitive adhesive tape, comprising a carrier tape which is impregnated with a flame retardant and is coated on one or both sides with the pressure-sensitive adhesive.

**9.** Use according to Claim 8, **characterized in that** the carrier tape used is a nonwoven, in particular a PET web or a woven/nonwoven composite, or a woven fabric.

**10.** Use according to Claim 8 or 9, **characterized in that** the carrier tape is coated with the pressure-sensitive adhesive as a melt by a hotmelt process, in particular by roller coating, in a melt die process or by extrusion coating.

**11.** Process for producing a flame-retardant pressure-sensitive adhesive according to any one of Claims 1 to 7, where

(a) at least one acrylate adhesive component is prepared by at least partly polymerizing at least one acrylate monomer, in the presence if desired of at least one comonomer, and
(b) successively or simultaneously at least one ammonium polyphosphate component and at least one resin component are combined with the at least one acrylate adhesive component.

**12.** Process according to Claim 11, **characterized in that that** the at least one ammonium polyphosphate component and the at least one resin component are compounded into a melt of the at least one acrylate adhesive component, in particular in an extrusion process.

**13.** Flame-retardant pressure-sensitive adhesive tapes having a pressure-sensitive adhesive according to any one of Claims 1 to 7.

**Revendications**

**1.** Masse autoadhésive peu inflammables, comprenant

(a) au moins un composant de masse adhésive acrylique,
(b) au moins un composant de polyphosphate d'ammonium,
(c) au moins un composant de résine,

**caractérisée en ce que** ledit au moins un composant de polyphosphate d'ammonium présente une fraction massique d'au moins 25% dans la masse autoadhésive.

**2.** Masse autoadhésive suivant la revendication 1, **caractérisée en ce que** ledit au moins un composant de polyphosphate d'ammonium présente une fraction massique de 30 à 40% en poids de la masse autoadhésive.

**3.** Masse autoadhésive suivant l'une quelconque des revendications qui précèdent, **caractérisée en ce que** ledit au moins un composant de résine présente une fraction massique d'au moins 25% en poids dans la masse autoadhésive.

**4.** Masse autoadhésive suivant l'une quelconque des revendications qui précèdent, **caractérisée en ce que** ledit au moins un composant d'adhésif acrylique présente un poids moléculaire moyen $M_w$ d'un maximum de 600 000 g/mole.

**5.** Masse autoadhésive suivant l'une quelconque des revendications qui précèdent, **caractérisée en ce que** ledit au moins un composant d'adhésif acrylique est à base d'au moins un monomère d'acrylate de la formule générale (1)

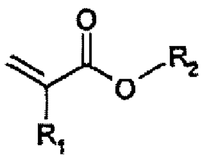

(1)

dans laquelle $R_1$ représente H ou un radical $CH_3$ et $R_2$ représente H ou est choisi dans le groupe des radicaux alkyle en $C_1$ à $C_{30}$ saturés, ramifiés ou non ramifiés, substitués ou non substitués.

6. Masse autoadhésive suivant l'une quelconque des revendications qui précèdent, **caractérisée en ce que** ledit au moins un composant d'adhésif acrylique est à base, outre ledit au moins un monomère d'acrylate, d'au moins un comonomère d'un photoinitiateur comportant une double liaison copolymérisable, en particulier un photoinitiateur Norrish I ou Norrish II, d'acrylate de benzoïne ou de benzophénone acrylée.

7. Masse autoadhésive suivant au moins l'une quelconque des revendications qui précèdent, **caractérisée en ce que** ledit au moins un composant d'adhésif acrylique est à base, outre ledit au moins un monomère d'acrylate, d'au moins un comonomère auquel est ajouté au moins un autre composant à haute température de transition vitreuse statique, en particulier un composé vinylique aromatique, de préférence des aromatiques ou des hétéroaromatiques en $C_4$ à $C_{18}$.

8. Utilisation d'une masse autoadhésive selon l'une quelconque des revendications 1 à 7 pour la préparation d'un ruban autoadhésif peu inflammable, comprenant un ruban de support imprégné d'un agent d'ignifugation et qui est enduit sur une face ou sur les feux faces de la masse autoadhésive.

9. Utilisation selon la revendication 8, **caractérisée en ce que** l'on utilise en tant que ruban de support un non-tissé, en particulier un non-tissé de PET ou un voile tissé ou un tissu.

10. Utilisation selon la revendication 8 ou 9, **caractérisée en ce que** le ruban de support est enduit de la masse autoadhésive par le procédé d'enduction "hotmelt", en particulier par enduction au rouleau, dans un procédé à filière à masse fondue ou par enduction par extrusion.

11. Procédé de préparation d'une masse autoadhésive peu inflammable selon l'une quelconque des revendications 1 à 7, dans lequel

    (a) on prépare au moins un composant d'adhésif acrylique par polymérisation au moins partielle d'au moins un monomère d'acrylate, le cas échéant en présence d'au moins un comonomère, et
    (b) on ajoute successivement ou en même temps au moins un composant de polyphosphate d'ammonium et au moins un composant de résine dans ledit au moins un composant d'adhésif acrylique.

12. Procédé suivant la revendication 11, **caractérisé en ce que** ledit au moins un composant de polyphosphate d'ammonium et ledit au moins un composant de résine sont mélangés à une masse fondue dudit au moins un composant d'adhésif acrylique, en particulier dans un procédé d'extrusion.

13. Rubans autoadhésifs peu inflammables comportant une masse autoadhésive selon l'une quelconque des revendications 1 à 7.